(19) **Europäisches Patentamt / European Patent Office / Office européen des brevets**

(11) **EP 4 701 310 A1**

(12) **EUROPEAN PATENT APPLICATION**
published in accordance with Art. 153(4) EPC

(43) Date of publication:
**25.02.2026 Bulletin 2026/09**

(21) Application number: **24728115.7**

(22) Date of filing: **15.04.2024**

(51) International Patent Classification (IPC):
*H04W 72/232* (2023.01)    *H04W 72/1273* (2023.01)
*H04L 1/1812* (2023.01)    *H04W 72/21* (2023.01)

(52) Cooperative Patent Classification (CPC):
**H04L 1/1812; H04W 72/1273; H04W 72/21; H04W 72/232**

(86) International application number:
**PCT/KR2024/095723**

(87) International publication number:
**WO 2024/219942 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.04.2023 US 202363460007 P**

(71) Applicant: **LG ELECTRONICS, INC.**
**Seoul 07336 (KR)**

(72) Inventors:
• **LEE, Sunghoon**
  **Seoul 06772 (KR)**
• **YANG, Suckchel**
  **Seoul 06772 (KR)**
• **KIM, Jaehyung**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING AND RECEIVING SIGNALS IN WIRELESS COMMUNICATION SYSTEM**

(57)    Disclosed herein is a method of monitoring a PDCCH by a terminal in a wireless communication system, the method including performing PDCCH monitoring in one or more scheduling cells configured for PDSCH scheduling among a plurality of cells, starting PDCCH monitoring skipping on a first scheduling cell based on first DCI detected through the PDCCH monitoring, performing reception related to at least one PDSCH in at least one of the plurality of cells, reporting a HARQ-ACK response for the at least one PDSCH, and resuming the PDCCH monitoring on the first scheduling cell. The PDCCH monitoring may be resumed on the first scheduling cell, based on that the HARQ-ACK response includes a NACK for a first PDSCH and that the first PDSCH has been scheduled through the first scheduling cell.

**FIG. 19**

EP 4 701 310 A1

**Description**

[Technical Field]

The present disclosure relates to a wireless communication system, and more particularly, to a method and apparatus for transmitting or receiving an uplink/downlink signal.

[Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

[Disclosure]

[Technical Problem]

An object of the disclosure is to provide a method and device for transmitting or receiving signals more accurately and efficiently in a wireless communication system.

The objects of the disclosure are not limited to this object, and other objects may be inferred from the disclosed embodiments.

[Technical Solution]

In an aspect of the present disclosure, provided herein is a method of monitoring a physical downlink control channel (PDCCH) by a terminal in a wireless communication system. The method may include performing PDCCH monitoring in one or more scheduling cells configured for physical downlink shared channel (PDSCH) scheduling among a plurality of cells, starting PDCCH monitoring skipping on a first scheduling cell based on first downlink control information (DCI) detected through the PDCCH monitoring, performing reception related to at least one PDSCH in at least one of the plurality of cells, reporting a hybrid automatic repeat request-acknowledgement (HARQ-ACK) response for the at least one PDSCH, and resuming the PDCCH monitoring on the first scheduling cell.

The PDCCH monitoring may be resumed on the first scheduling cell, based on that the HARQ-ACK response includes a negative acknowledgment (NACK) for a first PDSCH and that the first PDSCH has been scheduled through the first scheduling cell.

Based on that the HARQ-ACK response includes the NACK for the first PDSCH and that the first PDSCH has been scheduled through the first scheduling cell, a skipping duration configured on the first scheduling cell for the PDCCH monitoring skipping may be early terminated.

The first PDSCH may be received on a second cell which is different from the first scheduling cell.

The first PDSCH may be scheduled on the second cell through the first DCI or second DCI received on the first scheduling cell.

PDCCH monitoring skipping on a second scheduling cell started prior to transmission of the NACK for the first PDSCH may continue even after the transmission of the NACK for the first PDSCH.

The resuming of the PDCCH monitoring based on the transmission of the NACK for the first PDSCH may be applied only to the first scheduling cell among the one or more scheduling cells.

The terminal may receive, on the first scheduling cell in which the PDCCH monitoring is resumed, second DCI that schedules a retransmission for the first PDSCH.

The terminal may receive the retransmission for the first PDSCH based on the second DCI.

The NACK may be related to a decoding failure of the terminal for the first PDSCH.

A monitoring adaptation field in the first DCI may contain information related to the PDCCH monitoring skipping.

In another aspect, a computer-readable recording medium having recorded thereon a program for performing the method may be provided.

In another aspect, provided herein is an apparatus for wireless communication. The apparatus ma include a memory configured to store instructions, and a processor operable by executing the instructions, wherein the processor may performs operations, the operations including performing physical downlink control channel (PDCCH)monitoring on one or more scheduling cells configured for physical downlink shared channel (PDSCH) scheduling among a plurality of cells, starting PDCCH monitoring skipping on a first scheduling cell based on first downlink control information (DCI) detected through the PDCCH monitoring, performing reception related to at least one PDSCH in at least one of the plurality of cells, reporting a hybrid automatic repeat request-acknowledgement (HARQ-ACK) response for the at least one PDSCH, and resuming the PDCCH monitoring on the first scheduling cell.

The PDCCH monitoring may be resumed on the first scheduling cell, based on that the HARQ-ACK response includes a negative acknowledgment (NACK) for a first PDSCH and that the first PDSCH has been scheduled through the first scheduling cell.

The apparatus may be a terminal operating in a wireless communication system.

The apparatus may be a processing device configured to control a terminal operating in the wireless communication system.

In another aspect, provided herein is a method of transmitting a signal by a base station in a wireless communication system. The method may include transmitting first downlink control information (DCI) containing information about physical downlink control channel (PDCCH) monitoring skipping of a terminal on a first scheduling cell configured for physical downlink shared channel (PDSCH) scheduling among a plurality of cells, transmitting at least one PDSCH to the terminal on at least one of the plurality of cells, receiving from the terminal a hybrid automatic repeat request-acknowledgement (HARQ-ACK) response for the at least one PDSCH, and transmitting second DCI based on the PDCCH monitoring of the terminal being resumed on the first scheduling cell. Based on the HARQ-ACK response including a negative acknowledgment (NACK) for a first PDSCH scheduled through the first scheduling cell, the base station may determine that PDCCH monitoring of the terminal on the first scheduling cell has been resumed.

In another aspect, provided herein is a base station for wireless communications. The base station may include a memory configured to store instructions, and a processor operable by executing the instructions, wherein the processor may performs operations, the operations including transmitting first downlink control information (DCI) containing information about physical downlink control channel (PDCCH) monitoring skipping of a terminal on a first scheduling cell configured for physical downlink shared channel (PDSCH) scheduling among a plurality of cells, transmitting at least one PDSCH to the terminal on at least one of the plurality of cells, receiving from the terminal a hybrid automatic repeat request-acknowledgement (HARQ-ACK) response for the at least one PDSCH, and transmitting second DCI based on the PDCCH monitoring of the terminal being resumed on the first scheduling cell. Based on the HARQ-ACK response including a negative acknowledgment (NACK) for a first PDSCH scheduled through the first scheduling cell, the processor may determine that PDCCH monitoring of the terminal on the first scheduling cell has been resumed.

[Advantageous Effects]

According to an embodiment of the present disclosure, a signal can be more accurately and efficiently transmitted or received in a wireless communication system.

The effects of the disclosure are not limited to this effect, and other advantageous effects may be inferred from the disclosed embodiments.

[Description of Drawings]

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating DRX-related operations.

FIG. 11 is a diagram illustrating a WUS.

FIG. 12 is a diagram illustrating the delay in retransmission (scheduling) due to skipping of PDCCH monitoring in the current standard.

FIG. 13 illustrates an example of resuming PDCCH monitoring based on NACK transmission.

FIG. 14 illustrates an example of resuming PDCCH monitoring based on NACK transmission in a multi-cell environment.

FIGS. 15 and 16 show examples illustrating adaptation/resumption of PDCCH monitoring applied on a per individual scheduling cell basis in a multi-cell environment.

FIG. 17 is a diagram illustrating a UE operation that performs PDCCH monitoring again according to one embodiment.

FIG. 18 is a diagram illustrating UE and network operations related to resuming PDCCH monitoring.

FIG. 19 is a diagram illustrating PDCCH monitoring of a UE.

FIG. 20 is a diagram illustrating PDCCH transmission from a base station.

FIGS. 21 to 24 illustrate an example of a communication system 1 and wireless devices applicable to the present disclosure.

[Mode for Disclosure]

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" as used herein may be replaced by terms such as fixed station, Node B, gNode B (gNB), Access Point (AP), cell, or transmission and reception point (TRP). The term relay may be replaced by terms such as relay node (RN), relay station, and the like. Also, the term "terminal" may be replaced by terms such as user equipment (UE), mobile station (MS), mobile subscriber station (MSS), subscriber station (SS), and the like.

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- XR: eXtended Reality. VR (virtual reality), AR (augmented reality), MR (mixed reality)
- RRM: Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

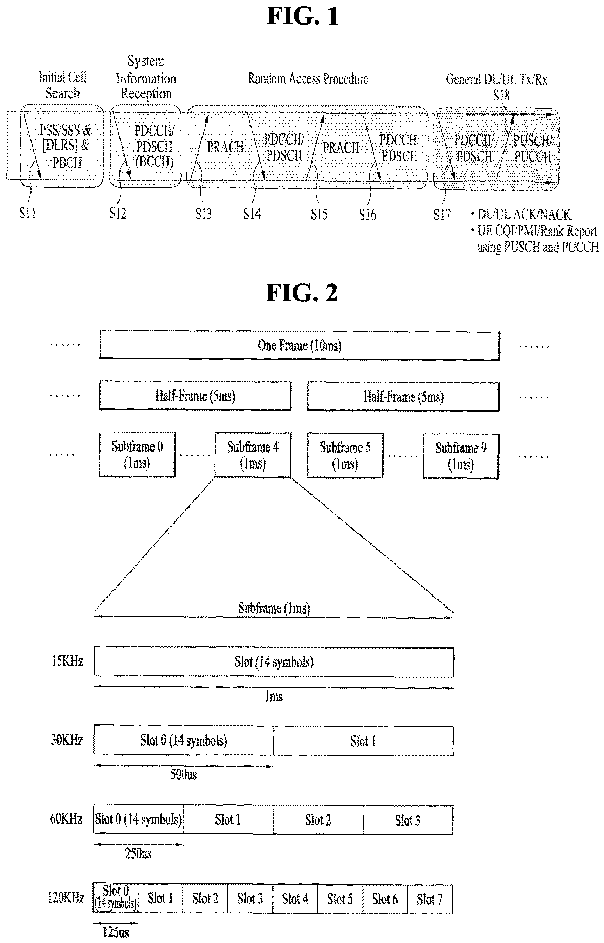

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot $N^{frame,u}_{slot}$: Number of slots in a frame $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

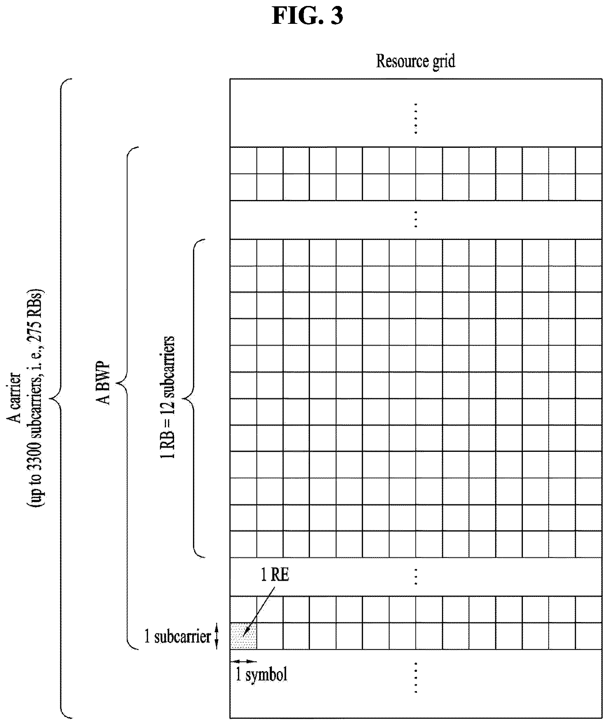

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

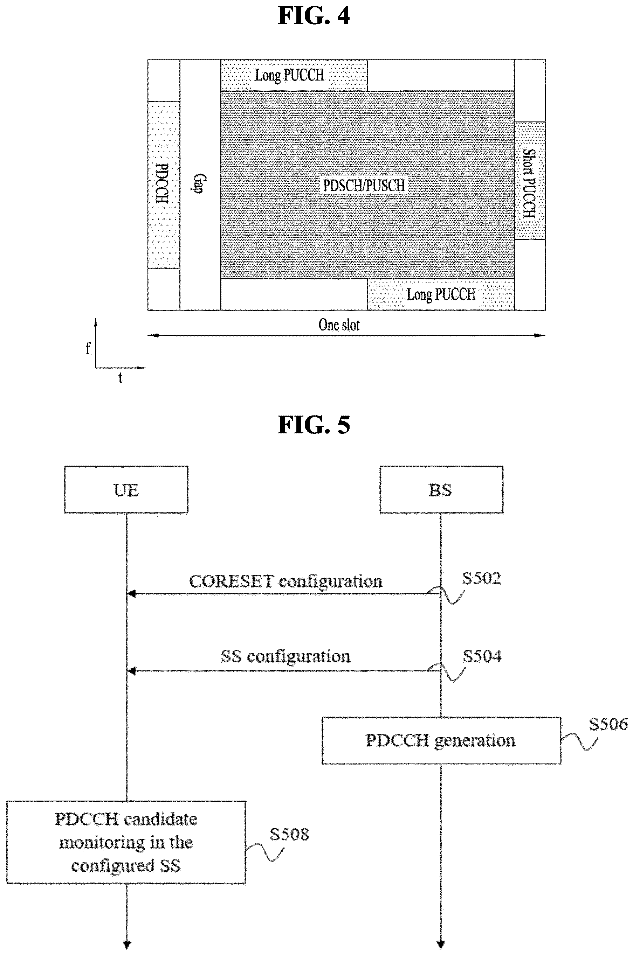

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |

(continued)

| DCI format | Usage |
|---|---|
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

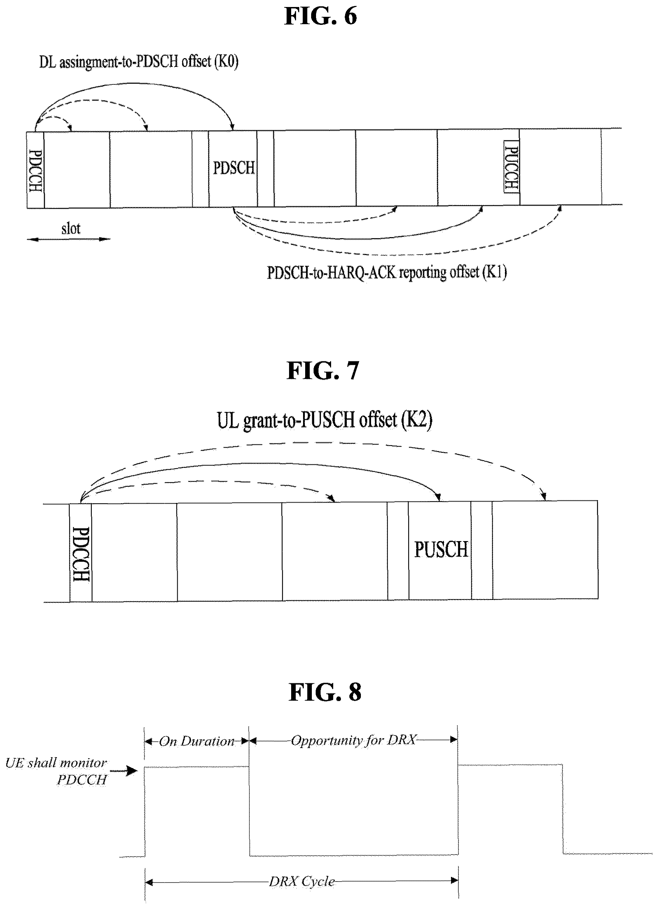

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH. As described above, a row index of pdsch-TimeDomainAllocationList provided UE-commonly or UE-specifically may be indicated by a TDRA field.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There is a plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.

- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.

2) In the case of CN-initiated paging, a UE-specific cycle is configured by NAS signaling.

3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(SFN + PF\_offset) \bmod T = (T \text{ div } N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

(2) RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

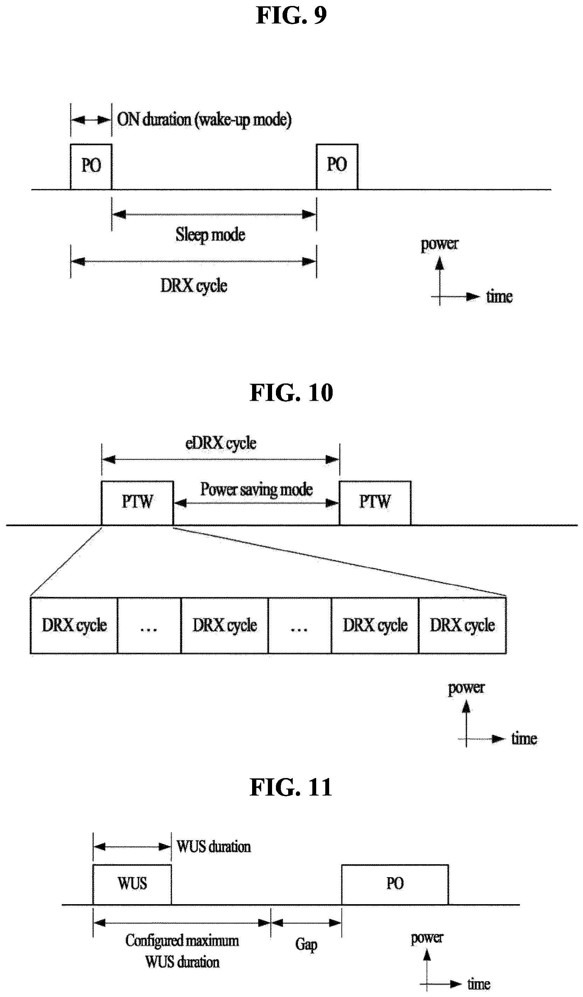

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

## WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

Resuming PDCCH monitoring based on NACK transmission

Embodiments described below relate to a method of resuming PDCCH monitoring by a UE based on the transmission of a NACK for PDSCH when the UE has skipped PDCCH monitoring according to a monitoring adaptation instruction.

Before the specific description of the embodiments of the present disclosure, a brief review of the monitoring adaptation techniques defined in the current standards is provided.

In the Rel-17 NR standard, a PDCCH monitoring adaptation operation dynamically directed through DCI is introduced to reduce the power consumption of a UE performing DRX operation in the RRC CONNECTED mode. Monitoring adaptation refers to the operation of adjusting (typically reducing) the load, number of PDCCH monitoring operations (e.g., the number of attempts to detect PDCCH candidates and the number of channel estimations for this purpose) that the UE needs to perform. As specific techniques, skipping PDCCH monitoring and SS set group (SSSG) switching have been introduced. The BS may indicate information related to PDCCH monitoring adaptation to the UE through scheduling DCI.

The UE may receive DCI indicating skipping PDCCH monitoring. The UE skips PDCCH monitoring for a skipping duration starting from the first symbol of the next slot following the slot in which the DCI is received.

Table 6 is an excerpt of TS38.213 Clause 10.4, which defines the content related to skipping PDCCH monitoring. Referring to Table 6, the indication to skip PDCCH monitoring may be provided through the PDCCH monitoring adaptation field in the scheduling DCI. The operation to skip PDCCH monitoring may be indicated together with SSSG switching or may be configured/indicated separately. The UE skips PDCCH monitoring for the skipping duration starting from the first symbol of the slot immediately after the slot in which the UE receives the DCI containing the indication to skip PDCCH monitoring.

[Table 6]

When the PDCCH monitoring adaptation field indicates to a UE to skip PDCCH monitoring for a duration on the active DL BWP of a serving cell, the UE starts skipping of PDCCH monitoring at the beginning of a first slot that is after the last symbol of the PDCCH reception providing the DCI format with the PDCCH monitoring adaptation field. If the UE transmits a PUCCH providing a positive SR before the UE detects a DCI format providing the PDCCH monitoring adaptation field indicating to the UE to skip PDCCH monitoring for the duration on the active DL BWP of the serving cell, the UE shall monitor PDCCH regardless of PDCCH skipping indication on all serving cells of the corresponding Cell Group when the SR is pending [11, TS 38.321]. If the UE transmits a PUCCH providing a positive SR after the UE detects a DCI format providing the PDCCH monitoring adaptation field indicating to the UE to skip PDCCH monitoring for the duration on the active DL BWP of the serving cell, the UE resumes PDCCH monitoring starting at the beginning of a first slot that is after a last symbol of the PUCCH transmission in all serving cells of the corresponding Cell Group. During the time of ra-ResponseWindow or msgB-ResponseWindow or the duration where ra-ContentionResolutionTimer is running, the UE shall not skip PDCCH monitoring on SpCell. After the UE detects a DCI format providing the PDCCH monitoring adaptation field indicating to the UE to skip PDCCH monitoring for the duration on the active DL BWP of a SpCell, when contention resolution is successful [11, TS 38.321], the UE resumes PDCCH monitoring on the SpCell. After the UE detects a DCI format providing the PDCCH monitoring adaptation field indicating to the UE to skip PDCCH monitoring for the duration on the active DL BWP of a serving cell, when a pending SR is cancelled [11, TS 38.321], the UE resumes PDCCH monitoring in all serving cells of the corresponding Cell Group. If UE transmits a RACH due to positive SR, the UE shall not skip PDCCH monitoring on any serving cell of the corresponding Cell Group during the time of ra-ResponseWindow or msgB-ResponseWindow or the duration where ra-ContentionResolutionTimer is running. If the DRX group of the serving cell is configured and enters outside Active Time, the UE terminates PDCCH skipping for the serving cell.

The skipping duration that may be indicated may be configured by a higher layer parameter pdcch-Skipping-DurationList. Table 7 is an excerpt from the standard document TS 38.331 related to the parameter pdcch-SkippingDurationLis for configuring the skipping duration. According to Table 7, up to three skipping durations may be configured/indicated to the UE through the higher layer parameter pdcch-SkippingDurationList. The skipping duration may be configured on a slot-by-slot basis per SCS. For example, for 15 kHz, it may be configured/indicated for up to 100 slots, which may correspond to 100 ms in time. In this way, the UE may be instructed not to monitor the PDCCH for a long period of time (e.g. 100 ms) depending on the higher layer parameter configuration.

[Table 7]

**pdcch-SkippingDurationList**

Provides one or more values to derive the skipping duration in unit of slots, as specified in TS 38.213 [13], clause 10.4. The DCI which schedules data indicates which of

the values is to be applied (see TS 38.213 [13], clause 10.4). For the 15kHz SCS, for each entry, only the first 26 values are valid and correspond to {1, 2, 3, .., 20, 30, 40, 50, 60, 80, 100}. For the 30kHz SCS, for each entry, only the first 46 values are valid and correspond to {1, 2, 3, .., 40, 60, 80, 100, 120, 160, 200}. For the 60kHz SCS, for each entry, only the first 86 values are valid and correspond to {1, 2, 3, .., 80, 120, 160, 200, 240, 320, 400}. For the 120kHz SCS, for each entry, the 166 values correspond to {1, 2, 3, .., 160, 240, 320, 400, 480, 640, 800}. For the 480kHz SCS, for each entry, the 166 values correspond to {4, 8, 12, .., 640, 960, 1280, 1600, 1920, 2560, 3200}. For the 960kHz SCS, for each entry, the 166 values correspond to {8, 16, 24, .., 1280, 1920, 2560, 3200, 3840, 5120, 6400}.

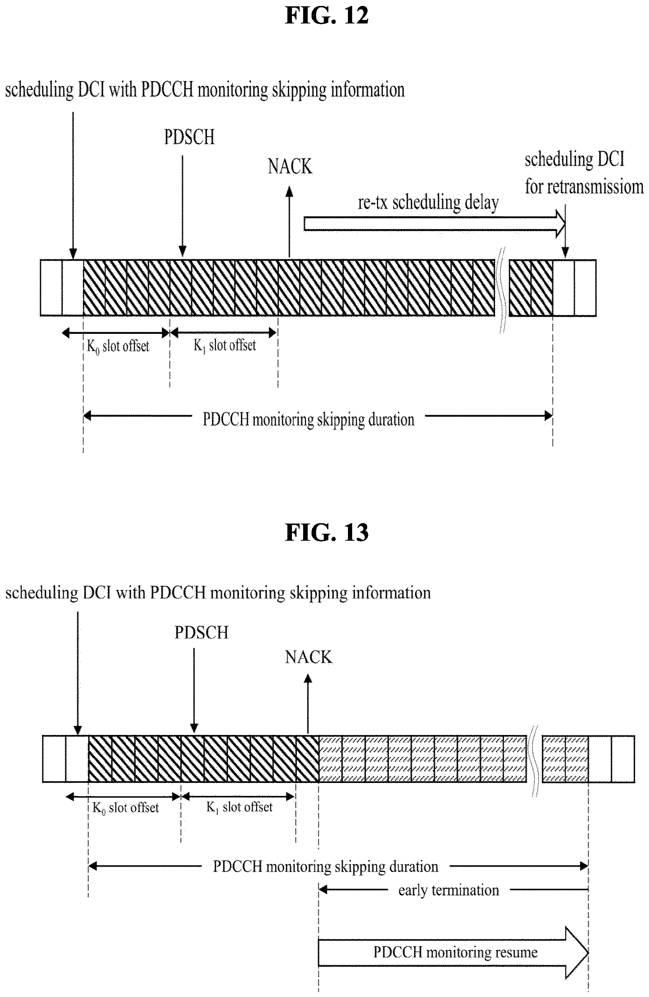

FIG. 12 is a diagram illustrating the delay in retransmission (scheduling) due to skipping of PDCCH monitoring in the current standard. According to the HARQ process supported by the current standard, when a UE does not successfully receive the scheduled PDSCH through DCI, it may transmit a NACK to the BS for the specific TB (or CBG) it failed to receive, thereby requesting retransmission for the TB (or CBG).

However, as shown in FIG. 12, according to the current standard, the UE does not monitor any further PDCCHs starting from the slot immediately following the reception of DCI indicating the PDCCH monitoring skipping. Therefore, even when the UE transmits a NACK for a TB (or CBG) that it failed to receive, it cannot receive DCI scheduling a retransmission for that TB (or CBG) and/or a PDSCH containing the retransmitted TB (or CBG) for the skipping duration. Consequently, only after the end of the initiated skipping duration may the UE and BS perform the retransmission procedure (e.g., the DCI for scheduling the retransmission and/or the PDSCH containing the retransmitted TB (or CBG)).

The HARQ process as defined in the current standard, and the skipping of PDCCH monitoring may cause latency corresponding to the skipping duration to the DL data (re)reception/scheduling and HARQ process.

The present disclosure proposes methods to solve this issue.

As an example to address the aforementioned issue, a UE in the RRC CONNECTED mode to which DRX operation (C-DRX) is indicated to save power, as shown in FIG. 13, may perform PDCCH monitoring again if the UE transmits a NACK after the monitoring adaptation operation, in particular PDCCH monitoring skipping, is indicated. For example, the UE may terminate the PDCCH skipping duration early based on the transmission of a UL signal (e.g., PUCCH/PUSCH) containing the NACK and resume PDCCH monitoring from the next slot following the slot in which the UL signal (e.g., PUCCH/PUSCH) containing the NACK is transmitted. The UE and the BS may transmit and receive DCI for scheduling PDSCH retransmission as PDCCH monitoring resumes.

Although FIG. 13 considers a single cell, when multiple cells are configured in the UE, it is unclear under what conditions the UE should continue to skip PDCCH monitoring and under what conditions it should resume PDCCH monitoring. Thus, these conditions need to be further defined.

As a simple example, a UE may resume PDCCH monitoring for all cells when a NACK is transmitted for a specific PDSCH, but this approach may have the disadvantage of waking up all cells involved in the retransmission as well as those not involved in the retransmission, which may not achieve the desired effect of PDCCH monitoring to reduce power.

For ease of description, the term DRX is used herein as a generic concept that includes C-DRX.

The application of the embodiments described herein is not limited to NR systems, DRX UE support, or C-DRX for UEs in the RRC_CONNECTED mode, and may be applied to various wireless communication transmission and reception structures and services. The proposed embodiments may also be applied to various operations (e.g., DRX applied to a UE in the RRC_IDLE mode) that may be defined with periodicity of a duration for which the UE does not need to expect to receive a DL signal. Furthermore, skipping of PDCCH monitoring, HARQ-ACK transmission structure, and any cell (carrier) and/or PDSCH for HARQ codebook transmission as used in the embodiments are exemplary, and the embodiments are not limited thereto. The proposed embodiments may be applied at various points in time related to PDCCH monitoring adaptation through various kinds of DCI.

The distinction of each method or option in the following description is intended for clarity of description and should not be construed as limiting to mean that each must be practiced as an independent invention. For example, each of the methods/options described herein may be practiced separately, but at least some of them may also be practiced in combination to the extent that they do not conflict with each other. Some of the terms, symbols, sequences, and the like used herein may be replaced by other terms, symbols, sequences, and the like as long as the principles of the invention are maintained.

According to one embodiment, a method is proposed for performing PDCCH monitoring again upon transmitting a NACK when a UE performing C-DRX operation in a multi-cell environment supporting cross-carrier scheduling performs a PDCCH monitoring skip operation (e.g., does not monitor the PDCCH for a certain interval).

In general, the UE may receive a PDSCH and transmit an ACK/NACK to inform the BS whether the UE has successfully received the PDSCH or whether a retransmission is needed. More specifically, the PDSCH may be configured with HARQ-ACK transmission on a per TB basis, or on a per code block group (CBG) basis, ACK/NACK transmission may be performed on a per CBG basis, and up to 16 HARQ processes may be configured. The UE performs these ACK/NACK transmissions with ACKs/NACKs for multiple TBs (or CBGs), multiple PDSCHs, and multiple cells (carriers) in the form of a HARQ codebook. For example, DCI format 1_1 contains a PDSCH-to-HARQ_feedback timing indicator field, which may be set to eight values from the 'dl-dataToUL-ACK' information element (IE), which may have an integer value from 0 to 15. When the PDSCH-to-HARQ_feedback timing indicator field has values of {1,2,3,5,6,7,8,11}, the UE may transmit ACKs/NACKs for all PDSCHs received in slots n-1, n-2, n-3, n-5, n-6, n-7, n-8, and n-11 together in the form of a HARQ-ACK codebook. In addition, when the UE is operating for multiple cells (carriers) (e.g., carrier aggregation), it may be configured to transmit in the form of a HARQ-ACK codebook at the same timing for all PDSCHs received on different cells (carriers). Thus, the UE may perform a single HARQ-ACK codebook transmission to perform ACK/NACK transmissions for multiple TBs or CBGs of multiple PDSCHs received in multiple slots on multiple cells (carriers) at once.

The NACK for a specific TB or CBG is transmitted within a single HARQ codebook after the PDSCH monitoring skipping operation is indicated through the scheduling DCI.

According to a proposed embodiment, based on which TB or CBG, which PDSCH, and/or which cell (carrier) the NACK transmitted by the UE is for, the extent and form in which the UE resumes PDCCH monitoring may be determined. For example, it is proposed that the target (e.g., cell (carrier), PDCCH candidate, etc.) for PDCCH monitoring to be resumed is determined based on which of the PDSCHs (on one or more cells) the UE transmits a NACK for. For example, depending on a cell (carrier) on which the UE receives a PDSCH for which the UE transmits a NACK, it may be determined which PDCCH monitoring (out of one or more ongoing PDCCH monitoring skips at the UE) is to be resumed. Furthermore, when PDCCH monitoring adaptation is indicated for multiple cells (carriers), the UE may transmit a NACK to re-perform PDCCH monitoring separately for each cell (carrier).

When the UE reports ACK/NACK(s) for one or more PDSCHs received on one or more cells in the form of a HARQ-ACK codebook, and the HARQ-ACK codebook includes a NACK due to decoding failure for a PDSCH scheduled with first DCI that includes an indication to skip (at least one) PDCCH (monitoring), the UE may operate to stop the (at least one) PDCCH monitoring skipping operation indicated through the first DCI and perform PDCCH monitoring again.

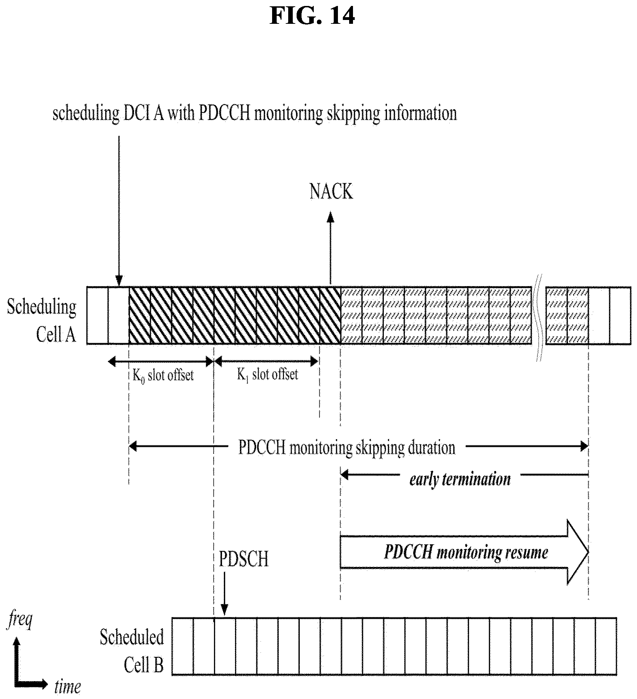

For example, when the UE has received DCI A containing a PDCCH (monitoring) skipping indication for a specific scheduling cell A (PDCCH monitoring on cell A), and decoding failure (or a corresponding NACK is reported) for at least one PDSCH scheduled from cell A (e.g., PDCCH on cell A) (or received through at least one scheduled cell (which may be either cell A or scheduled cell B that is configured for cross-carrier scheduling from cell A), the UE may stop/discard the PDCCH monitoring skipping indicated through DCI A and re-perform/resume PDCCH monitoring (on cell A). FIG. 14 assumes that the PDCCH monitoring skipping is indicated through the PDCCH monitoring adaptation field in DCI A on cell A, and that PDSCH reception on cell B is scheduled through a DCI on cell A (e.g., DCI A or another scheduling DCI on cell A) (i.e., cross carrier scheduling). In FIG. 14, the UE resumes PDCCH monitoring on cell A based on a NACK transmission for PDSCH reception on cell B (e.g., a NACK for PDSCH decoding failure).

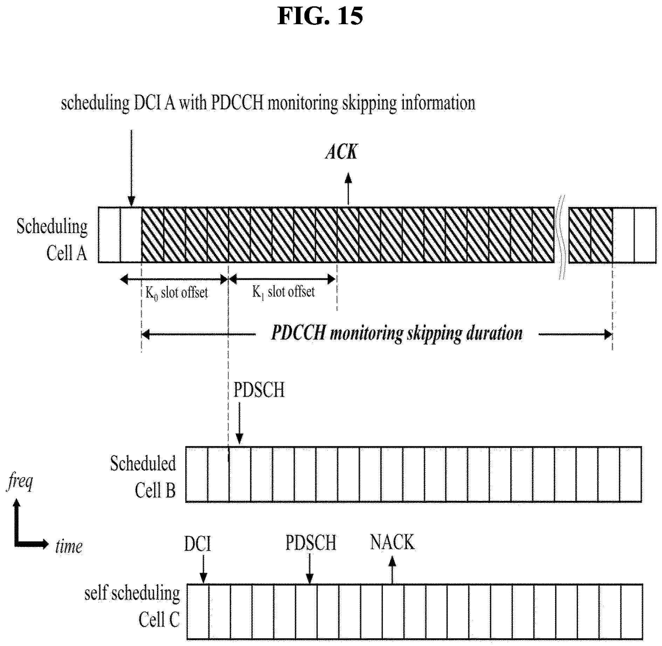

Else if the UE has received DCI A containing a PDCCH monitoring skipping indication for a specific scheduling cell A, and has succeeded in decoding (and reported a corresponding ACK) for all PDSCH(s) scheduled from cell A (through all scheduling cell(s)) (or no PDSCH(s) scheduled from cell A are present from the UE perspective), the UE may operate to perform the PDCCH monitoring skipping (for PDCCH monitoring on cell A) as indicated through DCI A (regardless of decoding success/failure for PDSCH(s) scheduled from a scheduling cell other than cell A and the status of corresponding ACK/NACK reporting). FIG. 15 assumes that PDCCH monitoring skipping is indicated through the PDCCH monitoring adaptation field in DCI A on cell A, and that PDSCH reception on cell B is scheduled through a DCI on cell A (e.g., DCI A or another scheduling DCI on cell A) (i.e., cross carrier scheduling). In the case where the UE transmits an ACK for the PDSCH reception on cell B, the PDCCH monitoring skipping started on cell A keep maintained. Even if a NACK is transmitted for PDSCH(s) scheduled by cell C, which is a different scheduling cell than cell A, the NACK transmission does not affect the PDCCH monitoring skipping initiated on cell A.

As such, when the UE receives a DCI containing a PDCCH monitoring skipping indication on a specific scheduling cell and reports a HARQ codebook containing at least one NACK, the UE may request a retransmission due to decoding failure for the PDSCH(s) it receives on the cell(s) scheduled by the DCI containing the PDCCH monitoring skipping indication (which may be of the same self-scheduling as the scheduling cell or may include other cell(s) that are cross-carrier scheduled) and may terminate PDCCH (monitoring) skipping and perform PDCCH monitoring again in order to perform the retransmission procedure. In other words, when the reported HARQ codebook contains NACK(s) for PDSCH(s) scheduled by the cell in which the PDCCH monitoring skipping operation is currently being performed, and the NACK(s) are for a retransmission request due to decoding failure, the UE may be configured to perform the PDCCH monitoring again. This is not the case if the NACK(s) are due to non-reception of the PDSCH(s) in the scheduled cell. This operation may be configured/indicated by a higher layer parameter.

The PDCCH monitoring adaptation indication/monitoring resumption through the scheduling DCI is applicable to individual scheduling cells, both to self-scheduling (when the scheduling PDCCH and the scheduled PDSCH are on the same cell (carrier)) and cross-carrier scheduling (when the scheduling PDCCH and the scheduled PDSCH are on different cells (carriers)).

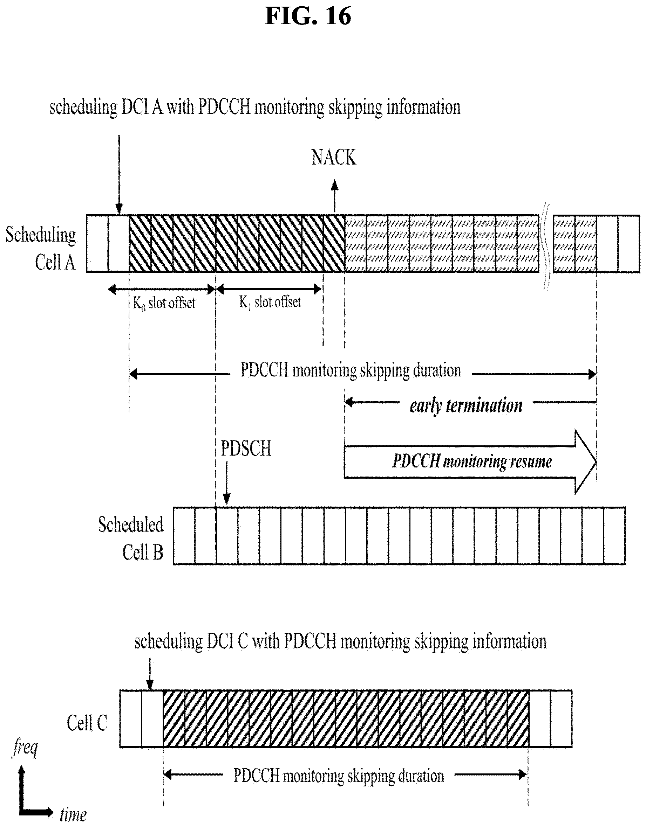

For example, referring to FIG. 16, PDCCH monitoring skipping is indicated by the PDCCH monitoring adaptation field in DCI A on cell A, and PDSCH reception on cell B is scheduled through DCI on cell A (e.g., DCI A or another scheduling DCI on cell A) (i.e., cross-carrier scheduling). DCI C on cell C includes information indicating PDSCH monitoring skipping, and in some cases may further include information for self/cross-carrier scheduling. The UE may transmit a NACK for the PDSCH on cell B and resume PDCCH monitoring on cell A based on the NACK transmission. However, since the PDCCH monitoring adaptation indication/monitoring resumption is applied to individual scheduling cells, the resumption of PDCCH monitoring on cell A does not affect the PDCCH monitoring skipping on cell C, and the UE continues the PDCCH monitoring skipping on cell C indicated through DCI C.

Furthermore, when the UE operates on multiple cells, whether to perform PDCCH monitoring before or after transmitting the HARQ codebook at the same point in time may vary among the cells. For example, a UE receives a DCI(s) containing a PDCCH monitoring skipping indication on a specific cell (e.g., cell A), and the DCI(s) schedules a PDSCH(s) that may be received on cells A and B. The UE may receive a DCI(s) from another cell (e.g., cell C) that does not include the PDCCH monitoring skipping indication, and the DCI(s) may schedule PDSCHs that may be received on cells C and D. In this case, the UE only stops PDCCH monitoring in cell A while receiving the scheduled PDSCH(s). The ACKs/NACKs for the PDSCH(s) it receives subsequently may be reported together in the form of a HARQ codebook. the UE may stop the PDCCH monitoring skipping only when the UE reports a NACK for PDSCHs received on cell A and cell B, i.e., a NACK corresponding to a decoding failure for the PDSCH(s) scheduled by the DCI(s) received on cell A (which not a NACK corresponding to non-reception of PDSCH ), in which PDCCH monitoring skipping is currently being performed. If it reports a NACK for PDSCH(s) received on cell C and cell D, i.e., if it reports a NACK for PDSCH(s) scheduled by the DCI(s) received on cell C in which PDCCH monitoring is not stopped, it does not perform/resume PDCCH monitoring for cell A in which PDCCH monitoring skipping is being performed.

The HARQ codebook that the UE configures for transmission may be configured as semi-static type-1 or dynamic type-2. When configuring the HARQ codebook, the UE reports an ACK if it has received a complete TB or CBG for a PDSCH and a NACK if it has failed to perform decoding. It also reports a NACK if there is no reception for PDSCH. This may be the case when there is no PDSCH reception at a preset location in configuring a type-1 codebook, or when it is determined that there is no PDSCH reception by checking the values of the counter-downlink assignment index (cDAI) and total-downlink assignment index (tDAI) in configuring a type-2 codebook. Therefore, the UE may distinguish whether the NACK it reports is for decoding failure or no PDSCH reception and determine whether to perform PDCCH monitoring again or maintain the PDCCH monitoring skipping. The UE may stop the PDCCH monitoring skipping that it is performing in a cell and start PDCCH monitoring again only when it reports a NACK due to decoding failure for the PDSCH(s) scheduled in a cell in which the DCI containing the PDCCH monitoring skipping indication is received.

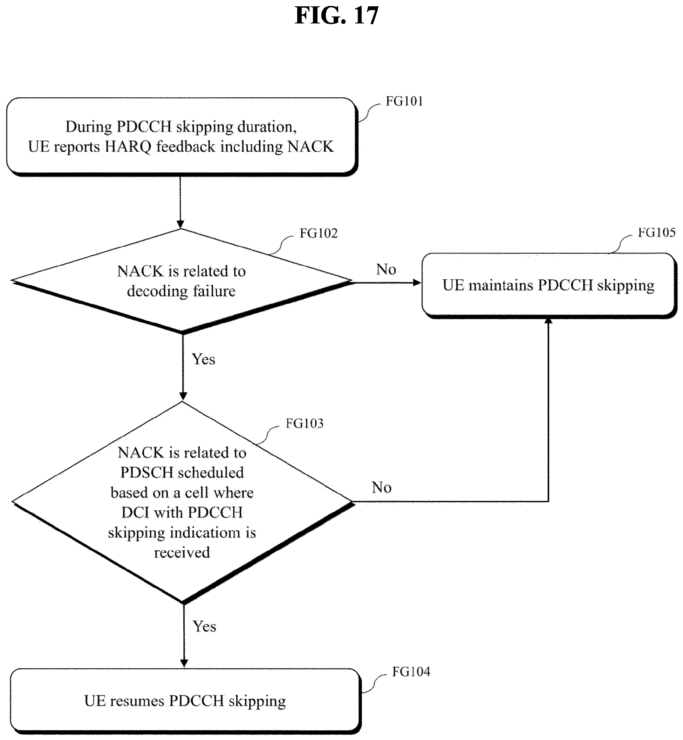

FIG. 17 is a diagram illustrating a UE operation that performs PDCCH monitoring again according to one embodiment. In FIG. 17, once the UE transmits a NACK report due to decoding failure during the PDCCH monitoring skipping operation, it may perform the retransmission procedure by performing PDCCH monitoring again.

Referring to FIG. 17, the UE receives a DCI containing the PDCCH monitoring skipping indication and performs the PDCCH monitoring skipping. The PDCCH monitoring skipping operation of the UE is performed only for an individual scheduling cell. That is, it is performed only for the cell in which the DCI containing the PDCCH monitoring skipping indication has been received. The UE may receive PDSCHs on multiple cells and report the ACKs/NACKs therefor together in the form of a HARQ codebook. There may be a case when the HARQ transmitted by the UE contains a NACK (FG101).

In this case, it may be determined whether the included NACK is due to a failure to decode the PDSCH (condition A) (FG102).

It may be determine whether the NACK is for PDSCH(s) scheduled through a cell in which the DCI containing the PDCCH monitoring skipping indication has been received(condition B) (FG103).

If the NACK is for retransmission due to decoding failure for PDSCH(s) scheduled on a cell in which the DCI containing the PDCCH monitoring skipping indication has been received, the UE stops the indicated PDCCH monitoring skipping and performs the PDCCH monitoring again (FG104). This may allow the UE to perform the retransmission procedure smoothly even when it is performing PDCCH (monitoring) skipping as directed by the network.

If the NACK corresponds to no PDSCH reception or is not for a PDSCH scheduled in a cell in which the DCI containing the PDCCH monitoring skipping indication has been received, the UE does not stop PDCCH (monitoring) skipping (FG105).

This may allow the UE to perform a corresponding procedure when a retransmission is needed even if it is performing the PDCCH monitoring skipping. Thereby, the UE may reduce potential latency due to the PDCCH monitoring skipping indication.

At least some of the above embodiments are summarized as follows. In NR, reception of PDCCH is performed by blind decoding (BD) of the UE for a search space set composed of a set of PDCCH candidates, and a large portion of the power consumption of the UE is associated with BD of PDCCH. In Rel. 17, PDCCH monitoring adaptation techniques are defined to reduce the power consumption caused by PDCCH BD, and one of the PDCCH monitoring adaptation techniques is to skip PDCCH monitoring for a certain period of time as directed by the network. In a cross-carrier scheduling situation, if PDCCH monitoring for scheduling retransmission is skipped due to PDCCH monitoring skipping after receiving PDCCH for scheduling initial transmission, the ongoing HARQ process may be delayed/interrupted. As an example to address this issue, if the UE reports a HARQ codebook containing a NACK when PDCCH monitoring skipping is in progress, the UE will resume PDCCH monitoring on the cell on which a DCI scheduling a PDSCH related to the NACK has been transmitted. In this case, the NACK may be provided due to a decoding failure for the PDSCH. In this way, by terminating PDCCH monitoring skipping in the scheduling cell early based on NACK transmission, the issue of PDCCH monitoring skipping resulting in delayed or impossible PDSCH retransmission/retransmission scheduling may be addressed. Furthermore, since PDCCH monitoring skipping/resumption is applied on a per-scheduling cell basis, power consumption efficiency may be improved in a multi-cell environment.

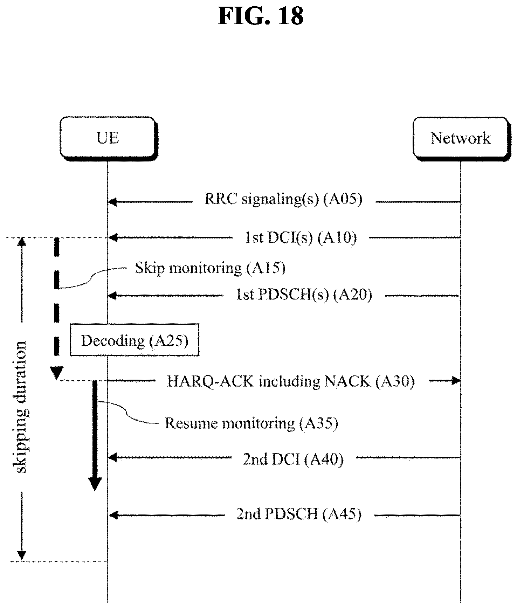

FIG. 18 is a diagram illustrating UE and network operations related to resuming PDCCH monitoring.

Referring to FIG. 18, the network may provide at least one RRC signaling to the UE (A05). The at least one RRC signaling may be related to at least one of: i) configuration information about a plurality of cells for carrier aggregation, e.g., configuration information about one or more scheduling cells for cross carrier scheduling, ii) configuration information about PDCCH monitoring, e.g., configuration for PDCCH monitoring adaptation (skipping) (e.g., skipping duration), iii) configuration information about PDSCH reception, and/or iv) configuration information about HARQ feedback reporting.

The network may transmit first DCI on a first scheduling cell (A10). A monitoring adaptation field in the first DCI may contain information about PDCCH monitoring skipping.

The UE may initiate the PDCCH monitoring skipping on the first scheduling cell based on the first downlink control channel (DCI) (A15).

The network may transmit a first PDSCH to the UE (A20). It is assumed that the first PDSCH is scheduled through the first scheduling cell and is received on a first cell or a second cell. For example, the first PDSCH may be scheduled through the first DCI or another scheduling DCI on the first scheduling cell.

The UE may perform decoding on the first PDSCH (A25) and report a HARQ-ACK response regarding whether the decoding is successful (A30). It is assumed that the HARQ-ACK response contains a negative acknowledgment (NACK) value for the first PDSCH.

The UE may resume PDCCH monitoring on the first scheduling cell (A35). Based on that the HARQ-ACK response includes the NACK for the first PDSCH and that the first PDSCH has been scheduled through the first scheduling cell, the UE may early terminate a skipping duration configured on the first scheduling cell for the PDCCH monitoring skipping.

The UE may receive, on the first scheduling cell in which the PDCCH monitoring is resumed, second DCI that schedules a retransmission for the first PDSCH (A40).

The UE may receive a second PDSCH related to the retransmission for the first PDSCH based on the second DCI (A45).

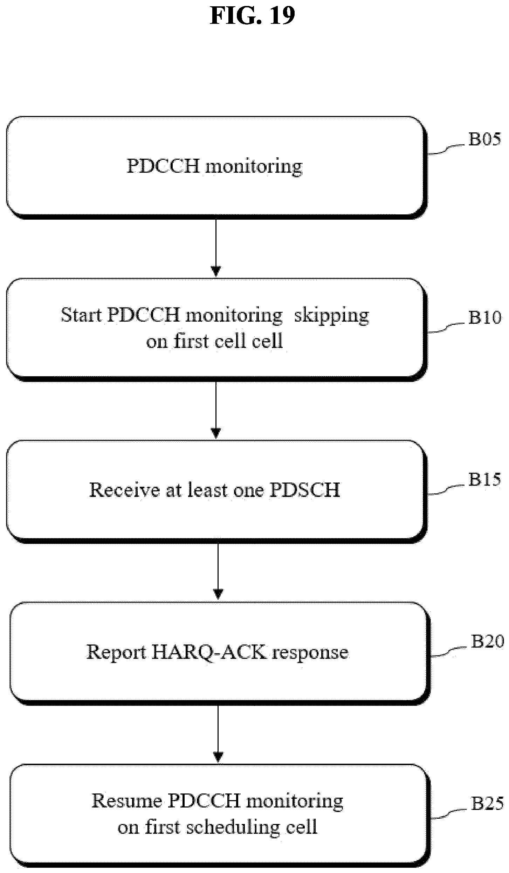

FIG. 19 is a diagram illustrating PDCCH monitoring of a UE.

Referring to FIG. 19, the UE may perform PDCCH monitoring in one or more scheduling cells configured for physical downlink shared channel (PDSCH) scheduling, from among a plurality of cells (B05).

The UE may start PDCCH monitoring skipping on a first scheduling cell, based on first downlink control channel (DCI) detected through the PDCCH monitoring (B10).

The UE may perform reception related to at least one PDSCH in at least one of the plurality of cells (B15).

The UE may report a hybrid automatic repeat request-acknowledgement (HARQ-ACK) response for the at least one PDSCH (B20).

The UE may resume the PDCCH monitoring on the first scheduling cell (C25).

The PDCCH monitoring may be resumed on the first scheduling cell, based on that the HARQ-ACK response includes a negative acknowledgment (NACK) for a first PDSCH and that the first PDSCH has been scheduled through the first scheduling cell.

Based on that the HARQ-ACK response includes the NACK for the first PDSCH and that the first PDSCH has been scheduled through the first scheduling cell, a skipping duration configured on the first scheduling cell for the PDCCH monitoring skipping may be early terminated.

The first PDSCH may be received on a second cell different from the first scheduling cell.

The first PDSCH may be scheduled on the second cell through the first DCI or second DCI received on the first scheduling cell.

PDCCH monitoring skipping on a second scheduling cell started prior to transmission of the NACK for the first PDSCH may continue even after the transmission of the NACK for the first PDSCH.

The resuming of the PDCCH monitoring based on the transmission of the NACK for the first PDSCH may be applied only to the first scheduling cell among the one or more scheduling cells.

The UE may receive, on the first scheduling cell in which the PDCCH monitoring is resumed, second DCI that schedules a retransmission for the first PDSCH.

The UE may receive the retransmission for the first PDSCH based on the second DCI.

The NACK may be related to a decoding failure of the UE for the first PDSCH.

A monitoring adaptation field in the first DCI may contain information related to the PDCCH monitoring skipping.

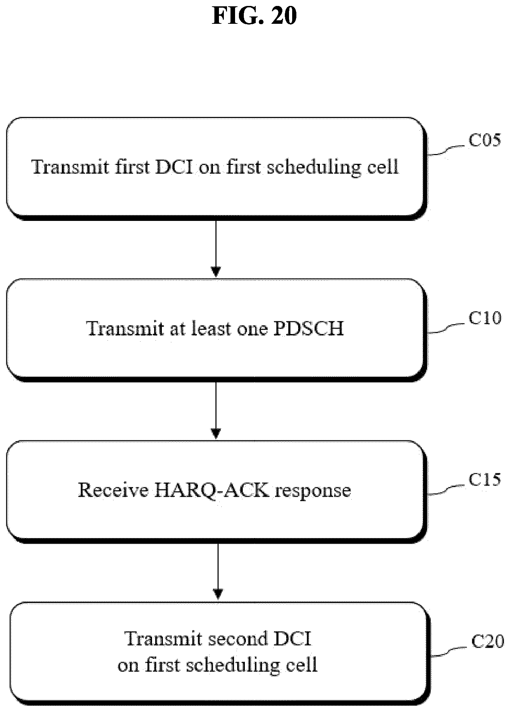

FIG. 20 is a diagram illustrating PDCCH transmission from a BS.

Referring to FIG. 20, a BS may transmit first downlink control information (DCI) containing information about physical downlink control channel (PDCCH) monitoring skipping of a UE on a first scheduling cell configured for physical downlink shared channel (PDSCH) scheduling among a plurality of cells (C05).

The BS may transmit at least one PDSCH to the UE on at least one of the plurality of cells (C10).

The BS may receive, from the UE, a HARQ-ACK response for the at least one PDSCH (C15).

The BS may transmit second DCI based on the PDCCH monitoring of the UE being resumed on the first scheduling cell (C20). Based on the HARQ-ACK response including a negative acknowledgment (NACK) for a first PDSCH scheduled through the first scheduling cell, the BS may determine that the PDCCH monitoring of the UE on the first scheduling cell has been resumed.

The second DCI may schedule a retransmission for the first PDSCH.

The UE may receive the retransmission for the first PDSCH based on the second DCI.

The NACK may be related to a decoding failure of the UE for the first PDSCH.

The monitoring adaptation field of the first DCI may contain information related to the PDCCH monitoring skipping.

Based on that the HARQ-ACK response includes the NACK for the first PDSCH and that the first PDSCH has been scheduled through the first scheduling cell, a skipping duration configured on the first scheduling cell for the PDCCH monitoring skipping may be early terminated.

The first PDSCH may be transmitted on a second cell different from the first scheduling cell.

The first PDSCH may be scheduled on the second cell through the first DCI or second DCI transmitted on the first scheduling cell.

The PDCCH monitoring skipping on a second scheduling cell indicated by the BS to the UE prior to reception of the NACK for the first PDSCH may continue even after reception of the NACK for the first PDSCH.

The resumption of the PDCCH monitoring based on the reception of the NACK for the first PDSCH may be applied only to the first scheduling cell among the one or more scheduling cells.

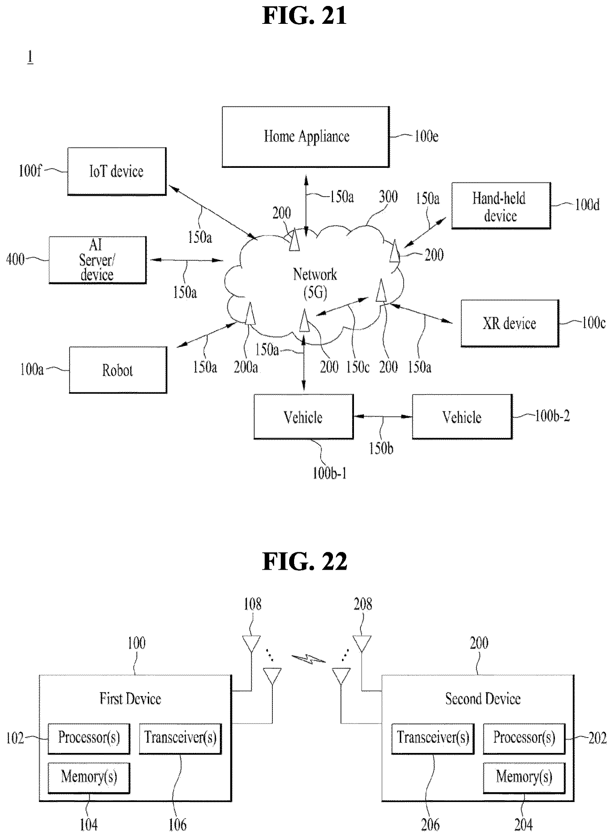

FIG. 21 illustrates a communication system 1 applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 22 illustrates wireless devices applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. Receivers included in the transceiver 206 may include a first receiver (MR) supporting a first type of waveform (e.g., OFDM) and a second receiver (LR) supporting a second type of waveform (e.g., OOK). The second receiver may consume less power than the first receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

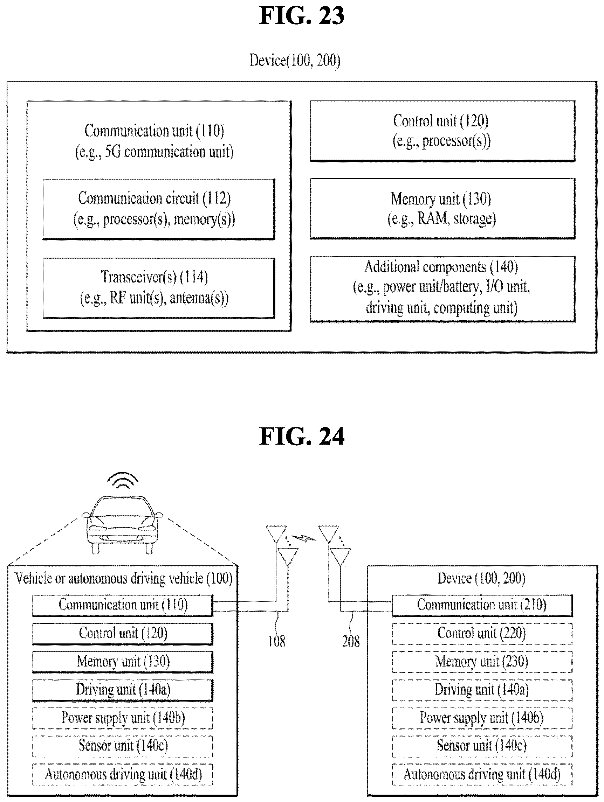

FIG. 23 illustrates another example of a wireless device applied to the present disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, an embodiment may be configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The present disclosure is applicable to UEs, BSs, or other apparatuses in a wireless mobile communication system.

**Claims**

1. A method of monitoring a physical downlink control channel (PDCCH) by a terminal in a wireless communication system, the method comprising:

   performing PDCCH monitoring in one or more scheduling cells configured for physical downlink shared channel (PDSCH) scheduling among a plurality of cells;
   starting PDCCH monitoring skipping on a first scheduling cell based on first downlink control information (DCI) detected through the PDCCH monitoring;
   performing reception related to at least one PDSCH in at least one of the plurality of cells;
   reporting a hybrid automatic repeat request-acknowledgement (HARQ-ACK) response for the at least one PDSCH; and
   resuming the PDCCH monitoring on the first scheduling cell,
   wherein the PDCCH monitoring is resumed on the first scheduling cell, based on that the HARQ-ACK response includes a negative acknowledgment (NACK) for a first PDSCH and that the first PDSCH has been scheduled through the first scheduling cell.

2. The method of claim 1, wherein, based on that the HARQ-ACK response includes the NACK for the first PDSCH and that the first PDSCH has been scheduled through the first scheduling cell, a skipping duration configured on the first scheduling cell for the PDCCH monitoring skipping is early terminated.

3. The method of claim 1, wherein the first PDSCH is received on a second cell which is different from the first scheduling cell.

4. The method of claim 3, wherein the first PDSCH is scheduled on the second cell through the first DCI or second DCI received on the first scheduling cell.

5. The method of claim 1, wherein PDCCH monitoring skipping on a second scheduling cell started prior to transmission of the NACK for the first PDSCH, continues after the transmission of the NACK for the first PDSCH.

6. The method of claim 1, wherein the resuming of the PDCCH monitoring based on transmission of the NACK for the first PDSCH is applied only to the first scheduling cell among the one or more scheduling cells.

7. The method of claim 1, further comprising:

receiving, on the first scheduling cell in which the PDCCH monitoring is resumed, second DCI that schedules a retransmission for the first PDSCH; and

receiving the retransmission for the first PDSCH based on the second DCI.

8. The method of claim 1, wherein the NACK is related to a decoding failure of the terminal for the first PDSCH.

9. The method of claim 1, wherein a monitoring adaptation field in the first DCI contains information related to the PDCCH monitoring skipping.

10. A computer-readable recording medium having recorded thereon a program for performing the method of claim 1.

11. An apparatus for wireless communication, the apparatus comprising:

a memory configured to store instructions; and

a processor configured to perform operations by executing the instructions,

wherein the operations of the processor comprise:

performing physical downlink control channel (PDCCH) monitoring on one or more scheduling cells configured for physical downlink shared channel (PDSCH) scheduling among a plurality of cells;

starting PDCCH monitoring skipping on a first scheduling cell based on first downlink control information (DCI) detected through the PDCCH monitoring;

performing reception related to at least one PDSCH in at least one of the plurality of cells;

reporting a hybrid automatic repeat request-acknowledgement (HARQ-ACK) response for the at least one PDSCH; and

resuming the PDCCH monitoring on the first scheduling cell,

wherein the PDCCH monitoring is resumed on the first scheduling cell, based on that the HARQ-ACK response includes a negative acknowledgment (NACK) for a first PDSCH and that the first PDSCH has been scheduled through the first scheduling cell.

12. The apparatus of claim 11, wherein the apparatus is a terminal operating in a wireless communication system.

13. The apparatus of claim 11, wherein the apparatus is a processing device configured to control a terminal operating in the wireless communication system.

14. A method of transmitting a signal by a base station in a wireless communication system, the method comprising:

transmitting first downlink control information (DCI) containing information regarding physical downlink control channel (PDCCH) monitoring skipping of a terminal on a first scheduling cell configured for physical downlink shared channel (PDSCH) scheduling among a plurality of cells;

transmitting at least one PDSCH to the terminal on at least one of the plurality of cells;

receiving from the terminal a hybrid automatic repeat request-acknowledgement (HARQ-ACK) response for the at least one PDSCH; and

transmitting second DCI based on the PDCCH monitoring of the terminal being resumed on the first scheduling cell,

wherein, based on the HARQ-ACK response including a negative acknowledgment (NACK) for a first PDSCH scheduled through the first scheduling cell, the base station determines that the PDCCH monitoring of the terminal on the first scheduling cell has been resumed.

15. A base station for wireless communications, the base station comprising:

a memory configured to store instructions; and

a processor configured to perform operations by executing the instructions,

wherein the operations of the processor comprise:

transmitting first downlink control information (DCI) containing information regarding physical downlink control channel (PDCCH) monitoring skipping of a terminal on a first scheduling cell configured for physical downlink shared channel (PDSCH) scheduling among a plurality of cells;

transmitting at least one PDSCH to the terminal on at least one of the plurality of cells;

receiving, from the terminal, a hybrid automatic repeat request-acknowledgement (HARQ-ACK) response for the at least one PDSCH; and

transmitting second DCI based on the PDCCH monitoring of the terminal being resumed on the first scheduling cell,

wherein, based on the HARQ-ACK response including a negative acknowledgment (NACK) for a first PDSCH scheduled through the first scheduling cell, the processor determines that the PDCCH monitoring of the terminal on the first scheduling cell has been resumed.

# FIG. 1

| Initial Cell Search | System Information Reception | Random Access Procedure | | | | General DL/UL Tx/Rx |
|---|---|---|---|---|---|---|

S18

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |
|---|---|---|---|---|---|---|---|

S11    S12    S13    S14    S15    S16    S17

- DL/UL ACK/NACK
- UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | ...... | Subframe 4 (1ms) | Subframe 5 (1ms) | ...... | Subframe 9 (1ms) |
|---|---|---|---|---|---|

Subframe (1ms)

**15KHz**

| Slot (14 symbols) |
|---|

1ms

**30KHz**

| Slot 0 (14 symbols) | Slot 1 |
|---|---|

500us

**60KHz**

| Slot 0 (14 symbols) | Slot 1 | Slot 2 | Slot 3 |
|---|---|---|---|

250us

**120KHz**

| Slot 0 (14 symbols) | Slot 1 | Slot 2 | Slot 3 | Slot 4 | Slot 5 | Slot 6 | Slot 7 |
|---|---|---|---|---|---|---|---|

125us

FIG. 3

# FIG. 4

# FIG. 5

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

On Duration — Opportunity for DRX

UE shall monitor PDCCH

DRX Cycle

# FIG. 9

# FIG. 10

# FIG. 11

# FIG. 12

scheduling DCI with PDCCH monitoring skipping information

PDSCH

NACK

scheduling DCI
for retransmissiom

re-tx scheduling delay

$K_0$ slot offset    $K_1$ slot offset

PDCCH monitoring skipping duration

# FIG. 13

scheduling DCI with PDCCH monitoring skipping information

PDSCH

NACK

$K_0$ slot offset    $K_1$ slot offset

PDCCH monitoring skipping duration

early termination

PDCCH monitoring resume

# FIG. 14

scheduling DCI A with PDCCH monitoring skipping information

NACK

Scheduling
Cell A

$K_0$ slot offset    $K_1$ slot offset

PDCCH monitoring skipping duration

*early termination*

*PDCCH monitoring resume*

PDSCH

*freq*

Scheduled
Cell B

*time*

# FIG. 15

scheduling DCI A with PDCCH monitoring skipping information

*ACK*

Scheduling Cell A

$K_0$ slot offset    $K_1$ slot offset

*PDCCH monitoring skipping duration*

PDSCH

*freq*

Scheduled Cell B

*time*

DCI    PDSCH    NACK

self scheduling Cell C

# FIG. 16

scheduling DCI A with PDCCH monitoring skipping information

NACK

Scheduling
Cell A

$K_0$ slot offset    $K_1$ slot offset

PDCCH monitoring skipping duration

*early termination*

PDSCH

*PDCCH monitoring resume*

Scheduled
Cell B

scheduling DCI C with PDCCH monitoring skipping information

Cell C

*freq*

PDCCH monitoring skipping duration

*time*

# FIG. 17

During PDCCH skipping duration,
UE reports HARQ feedback including NACK — FG101

NACK is related to
decoding failure — FG102

No → UE maintains PDCCH skipping — FG105

Yes

NACK is related to
PDSCH scheduled
based on a cell where
DCI with PDCCH
skipping indicatiom is
received — FG103

No

Yes

UE resumes PDCCH skipping — FG104

# FIG. 18

# FIG. 19

PDCCH monitoring — B05

Start PDCCH monitoring skipping on first cell cell — B10

Receive at least one PDSCH — B15

Report HARQ-ACK response — B20

Resume PDCCH monitoring on first scheduling cell — B25

# FIG. 20

Transmit first DCI on first scheduling cell — C05

Transmit at least one PDSCH — C10

Receive HARQ-ACK response — C15

Transmit second DCI
on first scheduling cell — C20

# FIG. 21

<u>1</u>

# FIG. 22

# FIG. 23

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 24

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108        208

Device (100, 200)

Communication unit (210)

Control unit (220)

Memory unit (230)

Driving unit (140a)

Power supply unit (140b)

Sensor unit (140c)

Autonomous driving unit (140d)

# EP 4 701 310 A1

<table>
<tr><td colspan="2"><strong>INTERNATIONAL SEARCH REPORT</strong></td><td colspan="2">International application No.<br><strong>PCT/KR2024/095723</strong></td></tr>
</table>

**A.    CLASSIFICATION OF SUBJECT MATTER**

**H04W 72/232**(2023.01)i; **H04W 72/1273**(2023.01)i; **H04L 1/1812**(2023.01)i; **H04W 72/21**(2023.01)i

According to International Patent Classification (IPC) or to both national classification and IPC

**B.    FIELDS SEARCHED**

Minimum documentation searched (classification system followed by classification symbols)

H04W 72/232(2023.01); H04W 24/08(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: multi-cell, PDCCH, monitoring, PDSCH, DCI, skip, NACK, decoding fail, resume, scheduling cell, adaptation field

**C.    DOCUMENTS CONSIDERED TO BE RELEVANT**

| Category* | Citation of document, with indication, where appropriate, of the relevant passages | Relevant to claim No. |
|---|---|---|
| Y<br><br>A | ERICSSON. PDCCH monitoring resumption after UL NACK. R1-2302398, 3GPP TSG-RAN WG1 Meeting #112bis-e, e-Meeting. 07 April 2023.<br>See section 2. | 1-4,8-15<br><br>5-7 |
| Y | SAMSUNG. On multi-cell PUSCH/PDSCH scheduling with a single DCI. R1-2301280, 3GPP TSG RAN WG1 #112. Athens, Greece. 17 February 2023.<br>See section 4. | 1-4,8-15 |
| Y | US 2023-0085896 A1 (TAKEDA, Kazuki et al.) 23 March 2023 (2023-03-23)<br>See paragraphs [0116]-[0118]; and figure 6. | 3-4,12-13 |
| Y | QUALCOMM INCORPORATED. Rel-18 TEI proposals. R1-2301446, 3GPP TSG RAN WG1 #112. Athens, Greece. 17 February 2023.<br>See section 4.2. | 8 |
| A | CATT. PDCCH skipping interaction with HARQ. R1-2302676, 3GPP TSG RAN WG1 #112bis-e, e-Meeting. 07 April 2023.<br>See section 2. | 1-15 |

☐ Further documents are listed in the continuation of Box C.          ☑ See patent family annex.

| | |
|---|---|
| \*    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **08 August 2024** | **08 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095723**

| Patent document cited in search report | | | Publication date (day/month/year) | Patent family member(s) | | | Publication date (day/month/year) |
|---|---|---|---|---|---|---|---|
| US | 2023-0085896 | A1 | 23 March 2023 | CN | 115211204 | A | 18 October 2022 |
| | | | | EP | 4098055 | A1 | 07 December 2022 |
| | | | | EP | 4098055 | A4 | 01 November 2023 |
| | | | | WO | 2021-151237 | A1 | 05 August 2021 |

Form PCT/ISA/210 (patent family annex) (July 2022)